# FASCICULE DE BREVET EUROPEEN

(11) **EP 1 963 123 B1**
(45) Date de publication et mention de la délivrance du brevet: **17.11.2010**
(21) Numéro de dépôt: 06842141.1
(22) Date de dépôt: 11.12.2006
(51) Int. Cl.: B60K 5/12

(54) **VEHICULE AUTOMOBILE COMPORTANT UN GROUPE MOTOPROPULSEUR ARRIERE POUVANT BASCULER LORS D'UN IMPACT**
KRAFTFAHRZEUG MIT EINEM WÄHREND EINES AUFPRALLS SCHWINGENDEN HINTEREN ANTRIEBSZUG
MOTOR VEHICLE COMPRISING A REAR DRIVE TRAIN SWINGING DURING AN IMPACT

(30) Priorité: 22.12.2005 FR 0513158
(43) Date de publication de la demande: 03.09.2008
(73) Titulaire: Renault SAS, 92100 Boulogne Billancourt (FR)
(72) Inventeur: VITRY, Bernard, F-78990 Elancourt (FR)
(86) Numéro de dépôt international: PCT/FR2006/051330
(87) Numéro de publication internationale: WO 2007/074260

(56) Documents cités:
- EP-A- 0 133 564
- EP-A- 0 965 476
- DE-A1- 2 056 102
- DE-A1- 4 318 254
- DE-A1- 19 650 348
- DE-A1- 19 926 605
- DE-C1- 19 636 167
- FR-A- 2 776 244
- US-A- 5 740 876
- PATENT ABSTRACTS OF JAPAN vol. 1997, no. 04, 30 avril 1997 (1997-04-30) -& JP 08 332858 A (TOYOTA MOTOR CORP), 17 décembre 1996 (1996-12-17)

## Description

La présente invention concerne un véhicule comportant un groupe motopropulseur fixé à l'arrière du véhicule.

Lors d'un impact sur l'arrière d'un tel véhicule automobile, le groupe motopropulseur forme un masque important qui encaisse la quasi-totalité du choc, limitant ou diminuant les zones fusibles absorbant l'énergie du choc.

Lors d'un tel choc, le système d'injection qui véhicule du carburant risque d'être endommagé et les fuites de ce carburant peuvent provoquer un incendie.

Le brevet US 3869017 et la demande de brevet allemand 10028704 décrivent des solutions pour absorber l'énergie d'un impact sur un véhicule automobile. Cependant ces solutions concernent la partie avant du véhicule et ne sont pas transposables à un véhicule automobile comportant un groupe motopropulseur arrière.

Le but de la présente invention est de créer des moyens pour protéger et absorber l'énergie d'impact sur l'arrière d'un véhicule équipé d'un groupe motopropulseur arrière, notamment à l'égard des risques d'incendie pouvant être occasionné lors d'un tel impact.

Suivant l'invention, le véhicule automobile comportant un groupe motopropulseur fixé à l'arrière du véhicule par au moins deux moyens de fixation situés au-dessus du centre de gravité du groupe motopropulseur, l'un des deux moyens étant situé à l'avant et l'autre à l'arrière dudit centre de gravité est **caractérisé en ce que** l'un des deux moyens de fixation est adapté pour céder sous l'effet d'un impact à l'arrière du véhicule pour permettre au groupe motopropulseur de pivoter autour d'un axe transversal par rapport à la direction longitudinale du véhicule.

Ainsi lors d'un impact sur l'arrière du véhicule, le groupe motopropulseur peut après rupture dudit moyen de fixation, pivoter et ainsi absorber l'énergie de l'impact.

Dans l'une des versions de l'invention, ledit moyen adapté pour céder est situé à l'arrière du centre de gravité.

Dans une autre version de l'invention, ledit moyen adapté pour céder est situé à l'avant du centre de gravité.

Dans la première version de l'invention, ledit moyen comprend un bras dont une extrémité est articulée à un support solidaire du groupe motopropulseur et dont l'autre extrémité est articulée à un support solidaire de la carrosserie du véhicule et deux leviers articulés entre eux, chacun de ces leviers étant en outre articulé à l'une des articulations du bras, ledit bras étant adapté pour céder en cas d'impact sur l'arrière du groupe motopropulseur.

La rupture du bras permet au groupe motopropulseur de basculer, tandis que les deux leviers peuvent pivoter en s'écartant l'un de l'autre, jusqu'à une position alignée, dans laquelle les deux leviers retiennent le groupe motopropulseur à la carrosserie.

Dans la seconde version de l'invention, ledit moyen de fixation comprend deux leviers articulés entre eux, l'un de ces leviers étant en outre articulé à un support solidaire de la partie avant du groupe motopropulseur et l'autre levier étant en outre articulé à un support solidaire de la carrosserie.

Grâce à ces deux leviers, la partie avant du groupe motopropulseur peut basculer vers le bas, en cas d'impact sur l'arrière de ce groupe motopropulseur.

Comme dans la première version, ce basculement absorbe une partie de l'énergie de l'impact.

D'autres particularités et avantages de l'invention apparaîtront encore tout au long de la description ci-après.

Aux dessins annexés, donnés à titre d'exemples non limitatifs :
- la figure 1 montre schématiquement en élévation, un groupe motopropulseur placé à l'arrière d'un véhicule, montrant les moyens de fixation de ce groupe à la carrosserie, selon une première version de l'invention,
- la figure 2 est une vue analogue à la figure 1 montrant l'effet d'un impact à l'arrière du groupe motopropulseur,
- la ligure 3 est une vue analogue à la figure 2, montrant l'effet d'un impact plus important, entraînant la rupture de l'un des moyens de fixation du groupe motopropulseur,
- la figure 4 est une vue analogue à la figure 1, montrant une seconde version de l'invention,
- la figure 5 est une vue analogue à la figure 4 montrant l'effet d'un impact.

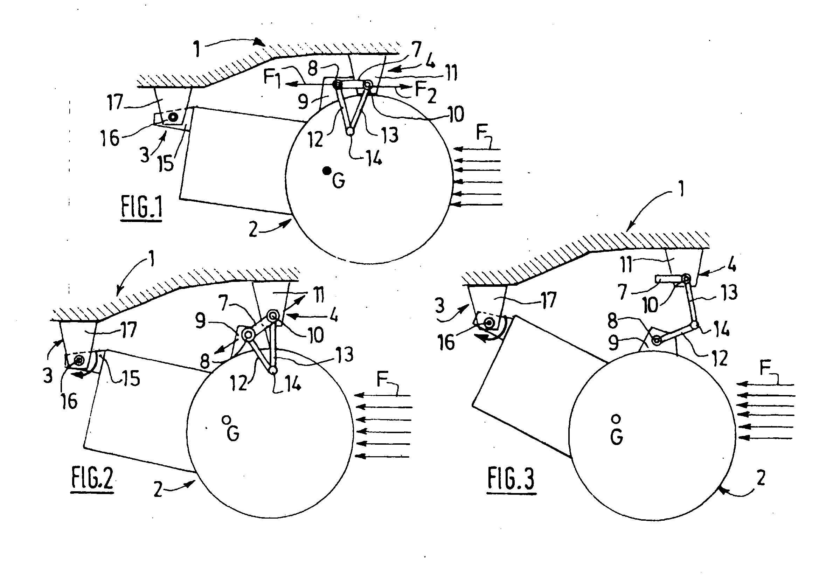

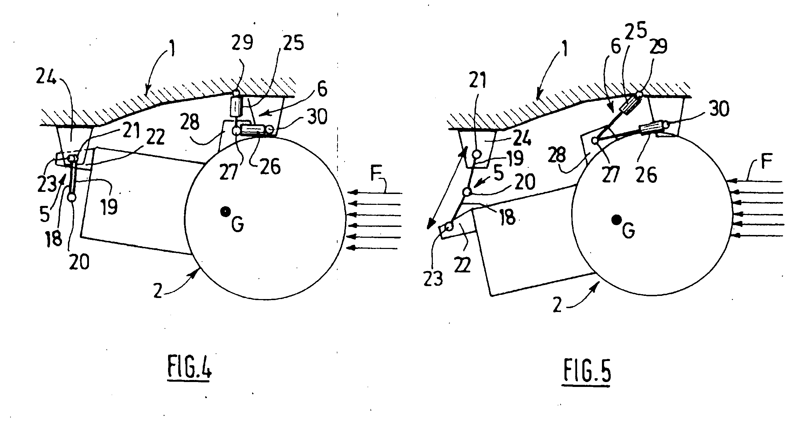

Les figures annexées montrent partiellement la carrosserie 1 d'un véhicule automobile comportant un groupe motopropulseur 2 fixé à l'arrière du véhicule par au moins deux moyens de fixation 3, 4 (figures 1 à 3) ou 5, 6 (figures 4, 5) situés au-dessus du centre de gravité (G) du groupe motopropulseur 2.

L'un 3 ou 5 des deux moyens est situé à l'avant et l'autre 4 ou 6 à l'arrière du centre de gravité (G). De préférence, la fixation du groupe motopropulseur à l'arrière s'effectue par deux moyens de fixation (4 ou 6) situés de part et d'autre du groupe motopropulseur.

Conformément à l'invention, l'un des deux moyens de fixation est adapté pour céder sous l'effet d'un impact à l'arrière du véhicule pour permettre au groupe motopropulseur 2 de pivoter (voir figures 3 et 5) autour d'un axe transversal par rapport à la direction longitudinale du véhicule.

Dans le cas des figures 1 à 3, le moyen de fixation adapté pour céder est celui situé à l'arrière du centre de gravité (G) du groupe motopropulseur 2.

Dans le cas des figures 4 et 5, le moyen de fixation adapté pour céder est celui situé à l'avant du centre de gravité (G) du groupe motopropulseur 2.

Dans la version représentée sur les figures 1 à 3, le moyen 4 pouvant céder comprend un bras 7 dont une extrémité est articulée en 8 à un support 9 solidaire du groupe motopropulseur 2 et dont l'autre extrémité est articulée en 10 à un support 11 solidaire de la carrosserie 1 du véhicule.

Le moyen de fixation 4 comprend en outre deux leviers 12, 13 articulés entre eux en 14. Chacun de ces leviers 12, 13 est en outre articulé à l'une des articulations 8, 10 du bras 7. De plus, le bras 7 est adapté pour céder en cas d'impact sur l'arrière du groupe motopropulseur (G), comme montré sur la figure 3.

Comme montré sur la figure 1, normalement le bras 7 s'étend sensiblement dans un plan horizontal et son articulation 8 au support 9 solidaire du groupe motopropulseur 2 est située devant son articulation 10 au support 11 solidaire de la carrosserie 1.

En outre, l'articulation 14 commune aux deux leviers 12, 13 s'étend sous le bras 7.

Par ailleurs, le moyen de fixation 3 situé à l'avant du centre de gravité (G) comprend un support 15 solidaire du groupe motopropulseur 2 fixé de façon articulée en 16 à un support 17 solidaire de la carrosserie 1.

Le dispositif représenté sur les figures 1 à 3 fonctionne de la façon suivante.

En cas d'impact (voir flèches F) sur l'arrière du groupe motopropulseur, le bras 7 est soumis aux forces F1 et F2 dirigées en sens contraire, comme montré sur la figure 1.

En cas d'impact modéré (voir figure 2), le bras 7 bascule et l'ensemble du groupe motopropulseur 2 pivote par rotation autour de l'articulation 16 située à l'avant de ce groupe.

En cas d'impact plus important, les forces F1 et F2 soumettent le bras 7 à une traction telle qu'elle entraîne sa rupture, comme montré par la figure 3.

Les articulations 8 et 10 n'étant plus reliées entre elles, le groupe motopropulseur 2 bascule vers le bas, et les deux leviers 12 et 13 s'écartent l'un de l'autre par rotation autour des articulations 8, 10, 14.

En fin de mouvement, le groupe motopropulseur 2 est retenu à la carrosserie 1 par les deux leviers 12, 13 alignés. Sous l'effet de l'impact, le groupe motopropulseur a basculé vers le bas suivant un angle correspondant à la distance entre les deux articulations 8, 10.

Le basculement du groupe motopropulseur a permis d'absorber au moins en partie l'énergie de l'impact, en limitant les risques d'incendie provoqué par la détérioration du système d'injection du moteur.

Dans la version représentée sur les figures 4 et 5, le moyen de fixation 5 adapté pour céder prévu à l'avant du groupe motopropulseur 2 comprend deux leviers 18, 19 articulés entre eux en 20. L'un 19 de ces leviers est en outre articulé en 21 à un support 22 solidaire de la partie avant du groupe motopropulseur 2 et l'autre levier 20 est en outre articulé en 23 à un support 24 solidaire de la carrosserie.

En position normale, les deux leviers 18, 19 s'étendent (voir figure 4) sensiblement dans un plan vertical et leur articulation commune 20 est située sous les articulations 21, 23 aux deux supports 22, 24.

Par ailleurs, le moyen de fixation 6 situé à l'arrière du centre de gravité (G) comprend deux organes de guidage 25, 26 adaptés pour s'allonger en cas d'impact F sur l'arrière du groupe motopropulseur 2.

Les deux organes de guidage 25, 26 sont articulés entre eux en 27 à un support 28 solidaire du groupe motopropulseur 2 et chacun de ces deux organes 25, 26 est séparément articulé en 29, 30 à un support solidaire de la carrosserie 1.

En position normale (voir figure 4) l'un 25 des organes de guidage s'étend dans un plan vertical et l'autre 26 s'étend dans un plan horizontal.

Dans l'exemple représenté, les organes de guidage 25, 26 sont des vérins.

Le dispositif représenté sur les figures 4 et 5 fonctionne de la façon suivante.

Sous l'effet de l'impact F sur l'arrière du groupe motopropulseur 2, les deux organes de guidage 25, 26 s'allongent (voir figure 5), tout en maintenant l'arrière du groupe motopropulseur 2 au même niveau que le niveau normal montré sur la figure 4. Cependant, sous l'effet de l'impact F les deux leviers 18, 19 situés à l'avant, passent de la position repliée (figure 4) à la position dépliée (figure 5) provoquant ainsi le basculement vers le bas de l'avant du groupe motopropulseur 2.

Comme précédemment, l'avance et le basculement du groupe motopropulseur ont permis d'absorber au moins en partie l'impact et de limiter les risques d'incendie provoqués par l'endommagement du système d'injection.

## Revendications

1. Véhicule automobile comportant un groupe motopropulseur (2) fixé à l'arrière du véhicule par au moins deux moyens de fixation (3, 4 ; 5, 6) situés au-dessus du centre de gravité (G) du groupe motopropulseur (2), l'un des deux moyens étant situé à l'avant et l'autre à l'arrière dudit centre de gravité (G), **caractérisé en ce que** l'un des deux moyens de fixation (3, 4 ; 5, 6) est adapté pour céder sous l'effet d'un impact (F) à l'arrière du véhicule pour permettre au groupe motopropulseur (2) de pivoter autour d'un axe transversal par rapport à la direction longitudinale du véhicule.

2. Véhicule automobile selon la revendication 1, **caractérisé en ce que** ledit moyen adapté pour céder est situé à l'arrière du centre de gravité (G).

3. Véhicule automobile selon la revendication 1, **caractérisé en ce que** ledit moyen adapté pour céder est situé à l'avant du centre de gravité (G).

4. Véhicule automobile selon la revendication 2, **caractérisé en ce que** ledit moyen (4) comprend un bras (7) dont une extrémité est articulée à un support (9) solidaire du groupe motopropulseur (2) et dont l'autre extrémité est articulée à un support (11) solidaire de la carrosserie (1) du véhicule et deux leviers (12, 13) articulés entre eux, chacun de ces leviers (12, 13) étant en outre articulé à l'une des articulations du bras (7), ledit bras (7) étant adapté pour céder en cas d'impact sur l'arrière du groupe motopropulseur (2).

5. Véhicule automobile selon la revendication 4, **caractérisé en ce que** ledit bras (7) s'étend sensiblement dans un plan horizontal et son articulation au support (9) solidaire du groupe motopropulseur (2) est située devant son articulation au support (11) solidaire de la carrosserie (1).

6. Véhicule automobile selon l'une des revendications 4 ou 5, **caractérisé en ce que** l'articulation (14) commune aux deux leviers (12, 13) s'étend sous ledit bras (7).

7. Véhicule automobile selon l'une des revendications 2 ou 4 à 6, **caractérisé en ce que** le moyen de fixation (3) situé à l'avant du centre de gravité (G) du groupe motopropulseur, comprend un support (15) solidaire du groupe motopropulseur fixé de façon articulée à un support (17) solidaire de la carrosserie (1).

8. Véhicule automobile selon la revendication 3, **caractérisé en ce que** ledit moyen de fixation (5) comprend deux leviers (18, 19) articulés entre eux, l'un (19) de ces leviers étant en outre articulé à un support (22) solidaire de la partie avant du groupe motopropulseur (2) et l'autre levier (18) étant en outre articulé à un support (24) solidaire de la carrosserie (1).

9. Véhicule automobile selon la revendication 8, **caractérisé en ce que** les deux leviers (18, 19) s'étendent sensiblement dans un plan vertical et leur articulation commune (20) est située sous les articulations aux deux supports (22, 24).

10. Véhicule automobile selon la revendication 3 ou 7 à 9, **caractérisé en ce que** le moyen de fixation (6) situé à l'arrière du centre de gravité (G) du groupe motopropulseur comprend deux organes de guidage (25, 26) adaptés pour s'allonger en cas d'impact sur l'arrière du groupe motopropulseur (2) ces deux organes de guidage (25, 26) étant articulés entre eux à un support (28) solidaire du groupe motopropulseur (2) et chacun de ces deux organes (25, 26) étant séparément articulé à un support solidaire de la carrosserie (1).

11. Véhicule automobile selon la revendication 10, **caractérisé en ce que** l'un (26) desdits organes s'étend dans un plan vertical et l'autre (25) s'étend dans un plan horizontal.

12. Véhicule automobile selon l'une des revendications 10 ou 11, **caractérisé en ce que** lesdits organes (25, 26) sont des vérins.

## Claims

1. Motor vehicle comprising a propulsion unit (2) mounted at the rear of the vehicle via at least two mounting means (3, 4; 5, 6) situated above the center of gravity (G) of the propulsion unit (2), one of the two means being situated forward of and the other to the rear of said center of gravity (G), **characterized in that** one of the two mounting means (3, 4; 5, 6) is designed to yield under the effect of an impact (F) to the rear of the vehicle in order to allow the propulsion unit (2) to pivot about an axis running transversely to the longitudinal direction of the vehicle.

2. Motor vehicle according to Claim 1, **characterized in that** said means designed to yield is situated to the rear of the center of gravity (G).

3. Motor vehicle according to Claim 1, **characterized in that** said means designed to yield is situated forward of the center of gravity (G).

4. Motor vehicle according to Claim 2, **characterized in that** said means (4) comprises an arm (7) one end of which is articulated to a support (9) attached to the propulsion unit (2) and the other end of which is articulated to a support (11) attached to the bodywork (1) of the vehicle, and two levers (12, 13) articulated to one another, each of these levers (12, 13) also being articulated to one of the articulations of the arm (7), said arm (7) being designed to yield in the event of a rear impact to the propulsion unit (2).

5. Motor vehicle according to Claim 4, **characterized in that** said arm (7) extends substantially in a horizontal plane and its articulation to the support (9) attached to the propulsion unit (2) is situated in front of its articulation to the support (11) attached to the bodywork (1).

6. Motor vehicle according to one of Claims 4 and 5, **characterized in that** the articulation (14) common to the two levers (12, 13) extends under said arm (7).

7. Motor vehicle according to one of Claims 2 or 4 to 6, **characterized in that** the mounting means (3) situated forward of the center of gravity (G) of the propulsion unit comprises a support (15) attached to the propulsion unit and articulated to a support (17) attached to the bodywork (1).

8. Motor vehicle according to Claim 3, **characterized in that** said mounting means (5) comprises two levers (18, 19) articulated to one another, one (19) of these levers also being articulated to a support (22) attached to the front part of the propulsion unit (2) and the other lever (18) also being articulated to a support (24) attached to the bodywork (1).

9. Motor vehicle according to Claim 8, **characterized in that** the two levers (18, 19) extend substantially in a vertical plane and their common articulation (20) is situated under the articulations to the two supports (22, 24).

10. Motor vehicle according to Claim 3 or 7 to 9, **characterized in that** the mounting means (6) situated to the rear of the center of gravity (G) of the propulsion unit comprises two guide members (25, 26) designed to lengthen in the event of a rear impact to the propulsion unit (2), these two guide members (25, 26) being articulated together to a support (28) attached to the propulsion unit (2) and each of these two members (25, 26) being separately articulated to a support attached to the bodywork (1).

11. Motor vehicle according to Claim 10, **characterized in that** one (26) of said members extends in a vertical plane and the other (25) extends in a horizontal plane.

12. Motor vehicle according to one of Claims 10 and 11, **characterized in that** said members (25, 26) are control cylinders.

## Patentansprüche

1. Kraftfahrzeug mit einem Antriebsaggregat (2), das durch mindestens zwei Befestigungsmittel (3, 4; 5, 6), die sich über dem Schwerpunkt (G) des Antriebsaggregats (2) befinden, am hinteren Teil des Fahrzeugs befestigt ist, wobei sich eines der beiden Mittel vor und das andere hinter dem Schwerpunkt (G) befindet, **dadurch gekennzeichnet, dass** eines der beiden Befestigungsmittel (3, 4; 5, 6) dazu ausgeführt ist, unter der Wirkung eines Aufpralls (F) auf den hinteren Teil des Fahrzeugs zu brechen, um dem Antriebsaggregat (2) zu gestatten, um eine Querachse bezüglich der Längsrichtung des Fahrzeugs zu schwenken.

2. Kraftfahrzeug nach Anspruch 1, **dadurch gekennzeichnet, dass** das zum Brechen ausgeführte Mittel hinter dem Schwerpunkt (G) positioniert ist.

3. Kraftfahrzeug nach Anspruch 1, **dadurch gekennzeichnet, dass** das zum Brechen ausgeführte Mittel vor dem Schwerpunkt (G) positioniert ist.

4. Kraftfahrzeug nach Anspruch 2, **dadurch gekennzeichnet, dass** das Mittel (4) einen Arm (7), von dem ein Ende an einem fest mit dem Antriebsaggregat (2) verbundenen Träger (9) angelenkt ist und von dem das andere Ende an einem fest mit der Karosserie (1) des Fahrzeugs verbundenen Träger (11) angelenkt ist, und zwei Hebel (12, 13), die aneinander angelenkt sind, umfasst, wobei jeder der Hebel (12, 13) des Weiteren an einem der Gelenke des Arms (7) angelenkt ist, wobei der Arm (7) dazu ausgeführt ist, bei einem Aufprall auf den hinteren Teil des Antriebsaggregats (2) zu brechen.

5. Kraftfahrzeug nach Anspruch 4, **dadurch gekennzeichnet, dass** sich der Arm (7) im Wesentlichen in einer horizontalen Ebene erstreckt und sein Gelenk an dem fest mit dem Antriebsaggregat (2) verbundenen Träger (9) vor seinem Gelenk an dem fest mit der Karosserie (1) verbundenen Träger (11) positioniert ist.

6. Kraftfahrzeug nach Anspruch 4 oder 5, **dadurch gekennzeichnet, dass** sich das den beiden Hebeln (12, 13) gemeine Gelenk (14) unter dem Arm (7) erstreckt.

7. Kraftfahrzeug nach einem der Ansprüche 2 oder 4 bis 6, **dadurch gekennzeichnet, dass** das Befestigungsmittel (3), das vor dem Schwerpunkt (G) des Antriebsaggregats positioniert ist, einen fest mit dem Antriebsaggregat verbundenen Träger (15) umfasst, der gelenkig an dem fest mit der Karosserie (1) verbundenen Träger (17) befestigt ist.

8. Kraftfahrzeug nach Anspruch 3, **dadurch gekennzeichnet, dass** das Befestigungsmittel (5) zwei Hebel (18, 19) umfasst, die aneinander angelenkt sind, wobei einer (19) der Hebel des Weiteren an einem fest mit dem vorderen Teil des Antriebsaggregats (2) verbundenen Träger (22) angelenkt ist und der andere Hebel (18) des Weiteren an einem fest mit der Karosserie (1) verbundenen Träger (24) angelenkt ist.

9. Kraftfahrzeug nach Anspruch 8, **dadurch gekennzeichnet, dass** sich die beiden Hebel (18, 19) im Wesentlichen in einer vertikalen Ebene erstrecken und ihr gemeinsames Gelenk (20) unter den Gelenken an den beiden Trägern (22, 24) positioniert ist.

10. Kraftfahrzeug nach Anspruch 3 oder 7 bis 9, **dadurch gekennzeichnet, dass** das Befestigungsmittel (6), das hinter dem Schwerpunkt (G) des Antriebsaggregats positioniert ist, zwei Führungsglieder (25, 26) umfasst, die dazu ausgeführt sind, bei einem Aufprall auf den hinteren Teil des Antriebsaggregats (2) auszufahren, wobei diese beiden Führungsglieder (25, 26) an einem fest mit dem Antriebsaggregat (2) verbundenen Träger (28) aneinander angelenkt sind und jeder dieser beiden Glieder (25, 26) getrennt an einem fest mit der Karosserie (1) verbundenen Träger angelenkt ist.

11. Kraftfahrzeug nach Anspruch 10, **dadurch gekennzeichnet, dass** sich einer (26) der Träger in einer vertikalen Ebne erstreckt und sich der andere (25) in einer horizontalen Ebene erstreckt.

12. Kraftfahrzeug nach Anspruch 10 oder 11, **dadurch gekennzeichnet, dass** die Glieder (25, 26) Zylinder sind.
